# EUROPÄISCHE PATENTANMELDUNG

(11) **EP 2 237 053 A1**
(43) Veröffentlichungstag der Anmeldung: **06.10.2010**
(21) Anmeldenummer: 09156632.3
(22) Anmeldetag: 30.03.2009
(51) Int. Cl.: G01R 19/25, G01R 19/165, H02P 29/02

(54) **Steuerverfahren für eine Drehstrommaschine mit einem dazugehörigen Drehstromsteller**

(71) Anmelder: Siemens Aktiengesellschaft, 80333 München (DE)
(72) Erfinder: Hertz, Dirk, 92260 Fichtenhof (DE); Seitz, Johann, 92224 Amberg (DE); Zitzler, Stefan, 92421 Schwandorf (DE)

(57) **Zusammenfassung**

Die Erfindung betrifft ein Steuerverfahren für eine Drehstrommaschine (2) und einen hierfür verwendeten Drehstromsteller (3) zur Steuerung der an die Drehstrommaschine (2) angelegten Spannung. Dabei liegt der Steuereinrichtung (5) des Drehstromstellers (3) der mittels einer Strommesseinrichtung (6) gemessene Strom der Drehstrommaschine (2) vor. Im Drehstromsteller (3) ist ein Stromgrenzwert abgespeichert und eine Vergleichseinrichtung (9) zur Erkennung des Überschreitens des Stromgrenzwerts durch einzelne Augenblickswerte des abgetasteten Stromes vorhanden. Der Drehstromsteller (3) ist derart ausgebildet, dass er den Strom begrenzt, nachdem ein Überschreiten des unterhalb der Strombereichsgrenze liegenden Stromgrenzwerts erkannt wurde.

## Beschreibung

Die Erfindung betrifft ein Steuerverfahren für eine Drehstrommaschine, bei dem die Spannung an der Drehstrommaschine verändert und der Strom der Drehstrommaschine durch Abtastung mittels einer Strommesseinrichtung erfasst wird.

Außerdem betrifft die Erfindung einen Drehstromsteller für eine Drehstrommaschine, mit dem die an die Drehstrommaschine angelegte Spannung steuerbar ist, wobei der Drehstromsteller eine Strommesseinrichtung zur Erfassung der Augenblickswerte des abgetasteten Stromes der Drehstrommaschine aufweist.

Anlaufverfahren für Drehstrommaschinen und hierzu verwendete Drehstromsteller sind bereits bekannt.

Dabei wird z.B. mithilfe einer Phasenanschnittsteuerung die Spannung am Drehstrommotor allmählich erhöht, um diesen sanft zu beschleunigen.

Verschiedene Verfahren sind bekannt, mit denen z.B. der Anlaufstrom beim Hochfahren des Drehstrommotors begrenzt wird. Zur Realisierung einer Stromregelung, eines Motorschutzes oder des Schutzes von stromführenden Bauteilen weisen Drehstromsteller verschiedentlich eine oder mehrere Strommesseinrichtungen auf. Die Stromsignale werden dabei häufig über Analog-Digital-Wandler digitalisiert und von der Steuereinrichtung weiterverarbeitet. Über den Bereich des Analog-Digital-Wandlers ist der Strommessbereich begrenzt. Je nach Auflösung des Analog-Digital-Wandlers wird innerhalb des Strombereichs eine bestimmte Genauigkeit der Strommessung erzielt. Der prozentuale Messfehler ist wegen des Digitalisierungsfehlers nicht über den gesamten Messbereich konstant und nimmt mit kleiner werdenden Strommesswerten zu. Die Verstärkung des Stromsignals muss deshalb so abgewogen werden, dass einerseits die Genauigkeit der Strommessung bei kleinen Strömen noch ausreichend ist und andererseits auftretende höhere Ströme noch im Strommessbereich des Analog-Digital-Wandlers liegen. Dieses Problem wird noch dadurch verstärkt, dass Drehstromsteller im Allgemeinen einen Bemessungsstrombereich verschieden großer Motoren abdecken müssen, so dass nicht für jeden möglichen Motorstrom ein eigenes Gerät angeboten werden muss. Wird die Verstärkung des Stromsignals so ausgelegt, dass der kleinste zu erfassende Strom, d.h. seine Augenblickswerte, noch ausreichend genau erfasst werden kann, ist oft nicht zu vermeiden, dass die Strommessbereichsgrenze bei sehr hohen Strömen überschritten wird. Die Überschreitung führt dazu, dass die Stromsignale, d.h. Augenblickswerte des Stromes, abgeschnitten und damit von der Steuereinrichtung kleiner als real erfasst werden. Die so verfälschten Stromwerte sind für jegliche Weiterverarbeitung zu Zwecken des Motorschutzes oder anderer Schutzeinrichtungen wertlos und müssen deshalb vermieden werden.

Der Erfindung liegt daher die Aufgabe zu Grunde, ein Verfahren der oben genannten Art zu schaffen, bei dem ein Überschreiten der Strombereichsgrenze durch Augenblickswerte des Stromes vermieden wird.

Außerdem soll der Drehstromsteller der oben genannten Art dahingehend verbessert werden, dass ein Überschreiten der Strombereichsgrenze vermieden wird.

Die zuerst genannte Aufgabe wird durch ein Verfahren mit den Merkmalen nach Anspruch 1 gelöst. Dabei wird mit dem Steuerverfahren der Strom begrenzt, sobald ein Augenblickswert des abgetasteten Stromes den vorgegebenen Grenzwert überschreitet, wobei der Stromgrenzwert unterhalb der Strombereichsgrenze der Strommesseinrichtung liegt.

Die weitere Aufgabe wird durch einen Drehstromsteller mit den Merkmalen nach Anspruch 5 gelöst. Dabei ist im Drehstromsteller ein Stromgrenzwert abgespeichert. Weiterhin sind Mittel zur Erkennung des Überschreitens des Stromgrenzwertes durch einen Augenblickswert des abgetasteten Stromes vorhanden. Der Drehstromsteller ist derart ausgebildet, dass er den Strom begrenzt, nachdem ein Überschreiten des unterhalb der Strombereichsgrenze liegenden Stromgrenzwerts erkannt wurde.

Vorteilhafte Weiterbildungen des erfindungsgemäßen Verfahrens sind den Unteransprüchen 2 bis 4 zu entnehmen.

Besonders vorteilhaft ist es, wenn gemäß Anspruch 2 als Steuerverfahren eine Phasenanschnittsteuerung verwendet wird.

Eine vorteilhafte Weiterbildung besteht, wenn gemäß Anspruch 3 die Strommesseinrichtung einen Analog-Digital-Wandler aufweist.

Weiterhin ist es vorteilhaft, wenn gemäß Anspruch 4 der Strom durch Veränderung des Phasenanschnittsteuerwinkels begrenzt wird.

Vorteilhafte Weiterbildungen des erfindungsgemäßen Drehstromstellers sind den Unteransprüchen 6 und 7 zu entnehmen.

Ein besonders vorteilhafter Drehstromsteller besteht, wenn gemäß Anspruch 6 eine Steuereinrichtung zur Phasenanschnittsteuerung vorgesehen ist, um die an die Drehstrommaschine angelegte Spannung zu steuern.

Weiterhin ist es vorteilhaft, wenn gemäß Anspruch 7 die Strommesseinrichtung einen Analog-Digital-Wandler aufweist.

Ein Ausführungsbeispiel der Erfindung wird im Folgenden anhand einer Zeichnung näher erläutert.

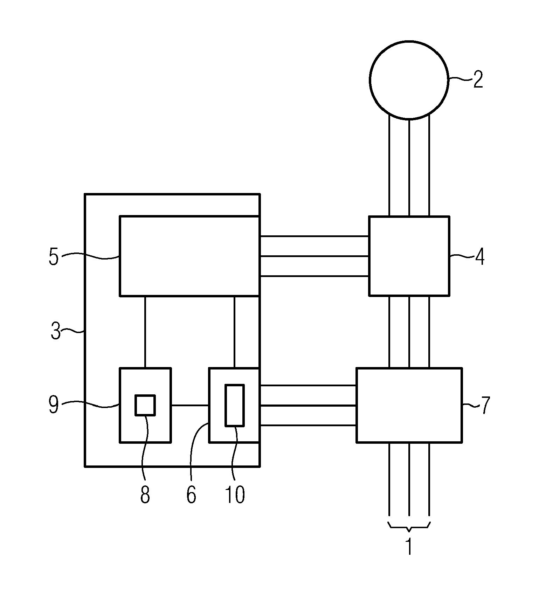

In der Zeichnung ist eine an ein Drehstromnetz 1 angeschlossene Drehstrommaschine 2, hier ein Drehstrommotor, dargestellt, deren Spannung von einem Drehstromsteller 3 gesteuert wird.

Hierzu ist eine Ventileinrichtung 4 vorgesehen, die durch eine Steuereinrichtung 5 des Drehstromstellers 3 ansteuerbar ist und auf diese Weise die an der Drehstrommaschine 2 anliegende Spannung verändert. Die Steuereinrichtung 5 ist für das Hochfahren, den Normalbetrieb und das Bremsen der Drehstrommaschine 2 nach bekannten Steuerverfahren wie z.B. der Phasenanschnittsteuerung zuständig.

Zur Realisierung einer Stromregelung, eines Motorschutzes oder des Schutzes von stromführenden Bauteilen des Drehstromstellers 3 ist eine Strommesseinrichtung 6 vorgesehen, die die von Stromwandlern 7 bereitgestellten Ströme der Drehstrommaschine 2 abtastet und weiterverarbeitet, um diese z.B. zu Schutzzwecken der Steuereinrichtung 5 zur Verfügung zu stellen. Mit der Abtastung werden die Augenblickswerte des Stromes erfasst. Der erfindungsgemäße Drehstromsteller 3 weist einen Speicher 8 auf, in dem ein unterhalb der Strombereichsgrenze der Strommesseinrichtung liegender Stromgrenzwert abgespeichert ist. Dieser Stromgrenzwert ist so gewählt, dass bei Begrenzung des Stromes auf maximal diesen Stromgrenzwert die einzelnen Augenblickswerte des abgetasteten Stromes aufgrund Überschreitens der Strombereichsgrenze keine Augenblickswerte des Stromes abgeschnitten werden, wie es bei einer mit einem Analog-Digital-Wandler 10 realisierten Strommesseinrichtung 6 gemäß der Figur möglich ist.

Um den Strombereich des Analog-Digital-Wandler 10 möglichst weitgehend auszunutzen, liegt der Stromgrenzwert vorzugweise knapp unterhalb der Strombereichsgrenze, d.h. nur soweit von der Strombereichsgrenze beabstandet, dass nach diesem Steuerverfahren ein Nichtüberschreiten der Strombereichsgrenze gerade sichergestellt werden kann.

Der Strommessbereich des Analog-Digital-Wandlers 10 ist begrenzt. Je nach Auflösung des Analog-Digital-Wandlers 10 wird innerhalb des Strombereichs eine bestimmte Genauigkeit der Strommessung erzielt. Der prozentuale Messfehler ist wegen des Digitalisierungsfehlers nicht über den gesamten Messbereich konstant und nimmt mit kleiner werdenden Strommesswerten zu. Die Verstärkung der Stromsignale muss deshalb so abgewogen werden, dass einerseits die Genauigkeit der Strommessung bei kleinen Strömen noch ausreichend ist und andererseits auftretende höhere Ströme noch im Strommessbereich des Analog-Digital-Wandlers 10 liegen. Wird die Verstärkung des Stromsignals so ausgelegt, dass der kleinste zu erfassende Strom noch ausreichend genau erfasst werden kann, ist oft nicht zu vermeiden, dass die Strommessbereichsgrenze bei sehr hohen Strömen überschritten wird. Eine Überschreitung würde dazu führen, dass die Stromsignale abgeschnitten und damit von der Steuereinrichtung 5 kleiner als real erfasst werden.

In dem Drehstromsteller 3 des vorliegenden Ausführungsbeispiels ist eine Vergleichseinrichtung 9 vorgesehen, die ein Überschreiten eines Augenblickswertes des abgetasteten Stromes über den Stromgrenzwert erkennt. Wird der Stromgrenzwert überschritten, wird durch das Steuerverfahren der Steuereinrichtung 5 die an der Drehstrommaschine 2 anliegende Spannung reduziert und der Strom entsprechend auf die Höhe des Stromgrenzwerts begrenzt.

Somit werden Ungenauigkeiten bei der Strommessung durch Überschreitung des Strombereichs durch einzelne Augenblickswerte des abgetasteten Stromes bei großen Strömen verhindert und damit eine sichere Funktion des Motorschutzes oder anderer Strom verarbeitender Schutzsysteme gewährleistet. Das Steuerverfahren und der hierfür vorgesehene Drehstromsteller 3 können bei allen bekannten An- und Auslaufverfahren eingesetzt werden. Ein kostenungünstiger Mehraufwand zur Vergrößerung des Strommessbereichs oder zur Überdimensionierung der Strom durchflossenen Leistungsbauteile kann vermieden werden.

## Patentansprüche

1. Steuerverfahren für eine Drehstrommaschine (2), wobei die Spannung an der Drehstrommaschine (2) verändert und der Strom der Drehstrommaschine durch Abtastung mittels einer Strommesseinrichtung (6) erfasst wird, **dadurch gekennzeichnet, dass** der Strom durch das Steuerverfahren begrenzt wird, sobald ein Augenblickswert des abgetasteten Stromes den vorgegebenen Stromgrenzwert überschreitet, wobei der Stromgrenzwert unterhalb der Strombereichsgrenze der Strommesseinrichtung (6) liegt.

2. Steuerverfahren nach Anspruch 1, **dadurch gekennzeichnet, dass** als Steuerverfahren eine Phasenanschnittsteuerung verwendet wird.

3. Steuerverfahren nach Anspruch 1 oder 2, **dadurch gekennzeichnet, dass** die Strommesseinrichtung (6) einen Analog-Digital-Wandler (10) aufweist.

4. Steuerverfahren nach einem Anspruch 2 oder 3, **dadurch gekennzeichnet, dass** der Strom durch Veränderung des Phasenanschnittsteuerwinkels begrenzt wird.

5. Drehstromsteller für eine Drehstrommaschine (2), mit dem die an die Drehstrommaschine (2) angelegte Spannung steuerbar ist, wobei der Drehstromsteller (3) eine Strommesseinrichtung (6) zur Erfassung des Augenblickswerte des abgetasteten Stromes der Drehstrommaschine (2) aufweist, **dadurch gekennzeichnet, dass** im Drehstromsteller (3) ein Stromgrenzwert abgespeichert ist und eine Vergleichseinrichtung (9) zur Erkennung des Überschreitens des Stromgrenzwerts durch einen Augenblickswert des abgetasteten Stromes vorhanden ist, und dass der Drehstromsteller (3) derart ausgebildet ist, dass er den Strom begrenzt, nachdem ein Überschreiten des unterhalb der Strombereichsgrenze liegenden Stromgrenzwerts erkannt wurde.

6. Drehstromsteller für eine Drehstrommaschine nach Anspruch 5, **dadurch gekennzeichnet, dass** eine Steuereinrichtung (5) mit Phasenanschnittsteuerung vorgesehen ist, um die an die Drehstrommaschine angelegte Spannung zu steuern.

7. Einrichtung nach Anspruch 6, **dadurch gekennzeichnet, dass** die Strommesseinrichtung (6) einen Analog-Digital-Wandler (10) aufweist.
